# EUROPEAN PATENT SPECIFICATION

(11) **EP 0 627 953 B1**
(45) Date of publication and mention of the grant of the patent: **16.12.1998**
(21) Application number: 92907872.3
(22) Date of filing: 28.02.1992
(51) Int. Cl.: B01D 53/04

(54) **FLUID FRACTIONATOR**
FLUIDUMFRAKTIONIERVORRICHTUNG
APPAREIL DE FRACTIONNEMENT DE FLUIDE

(43) Date of publication of application: 14.12.1994
(73) Proprietor: Sequal Technologies Inc., San Diego, California 92121 (US)
(72) Inventor: Sequal Technologies Inc., San Diego, California 92121 (US)
(74) Representative: Kinkeldey, Hermann, Dr.-Ing.
(86) International application number: US9201510
(87) International publication number: WO9316786

(56) References cited:
- DE-C- 737 929
- GB-A- 784 150
- JP-A-63 077 516
- US-A- 2 759 560
- US-A- 3 242 650
- US-A- 3 487 608
- US-A- 3 572 008
- US-A- 4 038 054
- US-A- 4 209 308
- US-A- 4 272 265
- US-A- 4 469 494
- US-A- 4 787 417
- US-A- 4 925 464
- US-A- 5 112 367

## Description

This invention relates to an improved apparatus and method for purifying a fluid product by removing certain components of a fluid mixture or contaminants from a source of a single fluid.

Since this invention is effective in separation of gases and liquids, depending on circumstances, the term fluid will be used as much as possible. It is understood that the term includes gases and liquids. Although focus is directed to the medical use as a respiratory support in the present embodiment, this invention is also useful in other situations where zeolites and sieve materials are employed, for example oil refinery procedures.

The use of selectively adsorbent molecular sieve materials having uniform pore sizes in separation of fluid components has been in practice since about 1948, with the first industrial research efforts occurring at Union Carbide Corporation. Based on the first experimental observations of the adsorption of gases on naturally occurring zeolites and the behavior of the latter as molecular sieves by Barrer in 1945 (J. Soc. Chem. Ind., 64:130), Milton and coworkers at Union Carbide synthesized the first industrial zeolite molecular sieves in 1948 (R.M. Milton, Molecular Sieves, Soc. Chem. Ind., London, 1968, p. 199), and they were test marketed in 1954.

Most separations of fluid mixtures by adsorption require regeneration of the adsorbent after saturation with the adsorbate. Since most separations are performed on fixed-bed columns, complex mechanisms involving intricate networks of interconnected and interoperating valves and switches have been devised to implement adsorption and desorption cycles in order to facilitate regeneration.

Costly and elaborate equipment like that described above is suitable for large scale commercial operations where the equipment is constantly monitored by competent technicians. However, in dealing with the problem of supplying relatively small quantities of oxygen to patients, especially at home, size, ease of operation and, even more importantly, reliability are the primary concerns.

The use of synthetic molecular sieves in a two-bed, pressure swing adsorber for separation of oxygen from air for medical and industrial applications became commercially practical in the early 1970's and many manufacturers now build such equipment.

The components in a typical two column system currently available are:
Air compressor
Heat exchanger
Air receiver or surge tank
Two molecular sieve chambers
Two pressure dropping orifices
Product tank (oxygen receiver)
Four or five two-way solenoid operated directional flow control valves (or, alternatively, one 4-way valve and one 2-way valve)
Electrical or electronic sequencing timer control for the valves
Pressure reducing regulator for oxygen product flow
Intake and exhaust silencers
Intake and product filters
Adjustable flow control valve for oxygen product flow
Connecting tubing and fittings to conduct fluid flows into and out of components

The above list of components clearly indicates the complexity of a typical medical oxygen concentrator (or respiratory support system), requiring a network of interconnected parts acting in concert. This complexity can give rise to the prospect of decreased reliability, and the chance that some component will malfunction, or a connection leak will develop, rendering the entire apparatus incapable of performing its life-support function.

The compressor discharge profile in a two column system, when plotted against time manifests a "sawtooth" pattern which is responsible for shortening compressor valve and bearing life, requiring an air receiver or surge tank to limit such fluctuation. This cyclic flow in the two column adsorber also produces large pressure variations in product gas flow, requiring the use of a pressure reducing regulator in the dispensing conduit. The abrupt, large pressure changes also require extensive silencing.

Various rotary valve systems are known in the art.

U.S.-A-4,925,464 shows a valve assembly which provides selective fluid flow switching and communication between a plurality of flow conduits. The system includes drive means for driving continuous relative rotation of valve members to enable rotationally cycled interconnection and fluid flow through interconnected apertures.

U.S.-A-4,272,265 shows a plurality of grouped vessels each having a molecular sieve bed, a first port of each vessel providing oxygen-enriched effluent from the bed and a second port permitting alternate pressurization and purging of the bed.

U.S.-A-4,787,417 describes a device having an air chamber section and a center section, with the air chamber section having an inlet port for compressed air, and the center section having a plurality of passages therein, disposed at equal intervals from each other and with respect to a centerline common to both sections. First valves are operatively associated with first passage ends and serve to control the entry of air into two adjacent passages at the same time.

However, to provide an ambulatory patient with acceptable mobility and quality of life, a supplementary oxygen supply system must be reliable, economical, compact, portable and light in weight. The instant invention provides a system which addresses all these parameters.

This invention according to claim 1 encompasses improved apparatuses for fractionating a fluid mixture by pressure swing molecular adsorption. These apparatuses contain a plurality of adsorber columns and a chamber functioning as a purified product holding tank.

The heart of the apparatuses are unique, rotary distributor valve assemblies for sequentially pressurizing and exhausting each column. This allows pressurization of one of the columns while simultaneously purging the adsorbent medium in another of such columns.

This invention according to claim 26 further encompasses improved processes for removing fluid components by selective adsorption of particular fluids from a stream of a mixture of fluids or a contaminating fluid component from a stream of a single fluid.

An incoming stream of a pressurized fluid mixture is sequentially distributed by means of rotating members of the rotary distributor `valves of the alternative embodiments disclosed herein into a plurality of columns packed with an adsorbent which is selective for the fluid or the contaminant fluids to be removed. The contaminants are retained by the adsorbent and the desired product fluid is allowed to pass through. By simultaneously refluxing product fluid under low pressure, through columns other than columns being pressurized, the contaminant is desorbed and exits the system.

Novel, smaller, smoother in operation, simpler and more reliable apparatuses for providing supplementary oxygen to patients are presented below as exemplary embodiments of the instant invention. Improved methods of fractionating fluid mixtures, which arise out of judicious use of the described apparatuses, are also presented.

### BRIEF DESCRIPTION OF THE DRAWINGS

Figure 1 depicts schematically a typical two-column adsorbent fractionating prior art system commercially available.
Figure 2 is a schematic representation of one embodiment of the entire fluid fractionator respiratory support system of the instant invention.
Figure 3 is a side elevation view of the apparatus which is the subject of Figure 2.
Figure 4 is a view taken on line 4-4 of Figure 3.
Figure 5 is an enlarged sectional view taken on line 5-5 of Figure 4.
Figure 6 is a sectional view taken on line 6-6 of Figure 5.
Figure 7 is a top plan view, partially cut away, of the rotor shoe, of the embodiment depicted in Figure 2;
Figure 8 is a sectional view taken on line 8-8 of Figure 7;
Figure 9 is a top plan view of the port plate of the embodiment depicted in Figure 2;
Figure 10 is a sectional view taken on line 10-10 of Figure 9;
Figure 11 is a side elevational view of an alternative configuration of the unit;
Figure 12 is a sectional view taken on line 12-12 of Figure 11;
Figure 13 is an enlarged sectional view taken on line 13-13 of Figure 12;
Figure 14 is a sectional view taken on line 14-14 of Figure 13;
Figure 15 is an underside view of the rotor shoe as taken on line 15-15 of Figure 13;
Figure 16 is a sectional view taken on line 16-16 of Figure 15; and
Figure 17 is an enlarged sectional view taken on line 17-17 of Figure 12.

### DESCRIPTION OF THE PREFERRED EMBODIMENTS

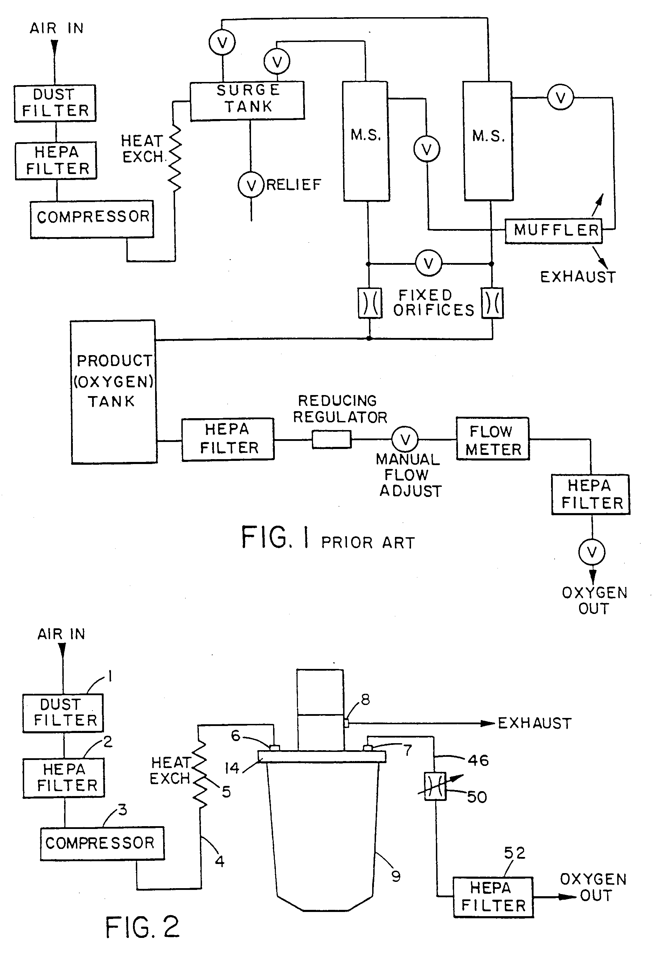

Figure 1 depicts schematically a typical small two-column oxygen concentrator commercially available for patient use. It can readily be seen from the schematic diagram that a typical medical oxygen concentrator is a complex machine, with a multitude of interconnected and interacting parts. Attendant with this manifold complexity is the prospect of decreased reliability, or the increased chance that some component will fail, rendering the entire apparatus incapable of performing its life-supporting function.

One embodiment of this invention, with its unique design which requires far fewer parts, will be described by following a volume of mixed fluids (air in this case) as it moves through the fractionation procedure. In Figure 2, ambient air is drawn in through a pair of filters, one dust 1 and one high efficiency particle arrestor (HEPA) 2 connected in series, by a compressor 3. The air is compressed and forced within a conduit 4 into a heat exchanger 5. (It should be noted that the filters shown in both Figure 1 and 2 could follow, rather than precede, the compressor). The heat exchanger removes most of the heat of compression before the air is fed into the inlet port 6 of the fluid fractionator. The cooling air in the exchanger is provided by a fan mounted on the compressor shaft, thereby, obviating the requirement of an additional motor and energy source. After most of the nitrogen is removed by the adsorber columns of the fractionator, an oxygen-rich fraction is tapped off through an outlet port 7 to the dispensing conduit, while the desorbed nitrogen is purged by the balance of the oxygen-rich product flow and leaves through an exhaust port 8.

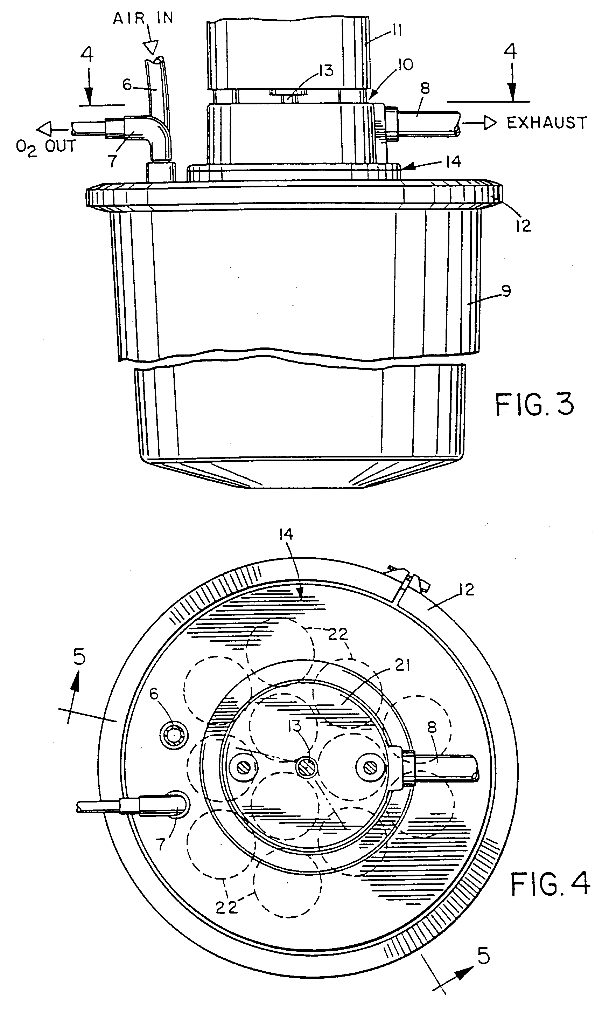

The fluid fractionator, in Figure 3, comprises a product holding tank 9 containing a cluster or array of adsorber columns within its housing, a rotary valve distributor 10 and a gear motor 11.

Figure 4, a view taken on line 4-4 of Figure 3, shows the arrangement of an array of columns 22 within the holding tank relative to the inlet 6, outlet 7 and exhaust 8 ports of the rotary distributor valve assembly, which is affixed to the holding tank by means of a clamp band 12. Twelve columns are shown in this case but there could be any number of six or more.

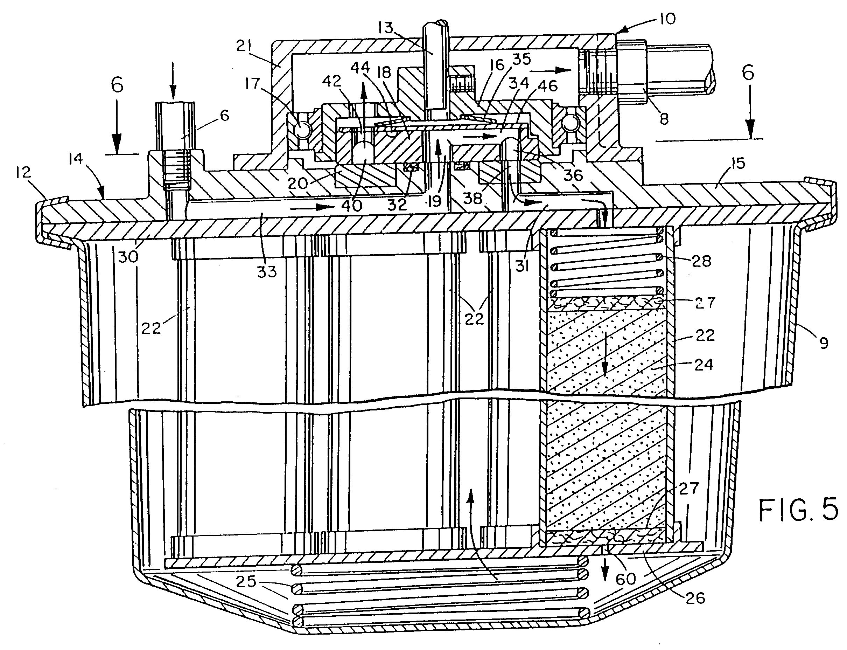

The rotary distributor valve depicted in Figure 5, which is an enlarged sectional view taken on line 5-5 of Figure 4, comprises a ported and channelled two-piece manifold 14 and a rotor 16 with a ported rotor shoe 18 and a cover plate 46, the rotor 16 being driven by a gear motor 11 (Figure 3) at about two revolutions per minute, with the rotor 16 turning in circumferential ball bearing unit 17. Conical disk or Belleville spring 35 urges cover plate 46 and rotor shoe 18 downward to secure them in position. The rotor 16 and its associated components are enclosed by cover 21, which is attached to manifold 14.

Following the arrows indicating fluid flow direction, the two-piece manifold 14 contains a top section 15 which is ported and channeled to take in a stream of fluid through the inlet port 6 and channel it through an air feed passage 33 into a centrally located inlet port 19 in the rotor shoe 18, and subsequently to channel the fluid mixture exiting the rotor shoe radially from a circular array of inlet ports located in the port plate 20 towards each column 22 of an array of columns arranged about the center of the manifold. Each of these columns contains a bed of adsorbent material 24 (zeolite in this case) which is selective for a particular molecular species of fluid or contaminant. The packed bed is held in place by a plate 26 at the bottom and perforated plates 27 at top and bottom with a spring 28 at the top. The bottom plate has a pressure-dropping means such as a small orifice 60, the diameter of which is empirically determined, at the center of each column.

The bottom half of the manifold, which is also an upper column header plate 30, affixed to the top half of the manifold by means of a clamp band 12, acts as a cover for the channels and has the array of columns attached to its underside. The channels in the manifold are sealed by a gasket or sealing compound.

Recessed into the top of the manifold, coaxial to the exit port of the air feed channel 33, sealed and immobilized by means of a slot and key, is the port plate 20 which contains a number of holes in an equally spaced circular pattern, equal in number and aligned with the circular distribution of entry ports of channels to individual columns in the manifold. The manifold has a groove machined into its upper surface, just inside the port plate, which contains an air inlet rotary seal 32. The port plate is made from a suitable hardened material.

The other major component of the rotary distributor valve is a gear motor-driven rotor 16 containing a ported rotor shoe 18, which slides over the rotor plate (Figure 5, 6, 7, and 8 all depict various aspects of the rotor/shoe). The rotor shoe is made from material known in the art to be suitable for use with the hardened material comprising the port plate, and is held in position over the rotor plate by spring-loaded or pressure compensated means. Shown is a conical or Belleville pressure compensating spring to counteract supply pressure. An arrangement of small coil springs can also be utilized for this purpose.

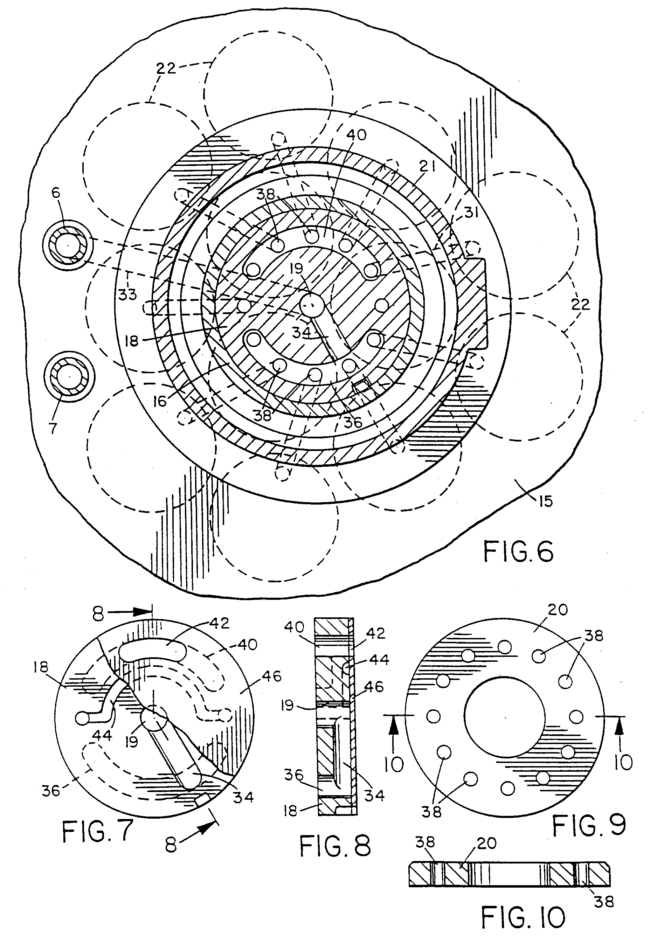

In the rotor shoe, there are three channels. One channel is a pressurizing channel or air feed passage 34 originating at the central fluid inlet port 19, and radiating into an arcuate slot 36 to simultaneously serve as a conduit into several of the circularly positioned ports in the port plate. As the rotor shoe turns, each new port appearing in the slot is pressurized, and the port at the other end of the slot passes out of the slot and is depressurized. Full system pressure is maintained at all intermediate ports. Figure 6, a sectional view taken on line 6-6 of Figure 5, shows the relationship of the arcuate air feed port or slot 36 of the rotor shoe 18 and the receiving ports 38 in the port plate, as well as the air feed channels 31 to each of the columns 22.

In another channel, the wide exhaust port 40 collects refluxed fluid impurities desorbing and exiting from the columns, and channels them out through an exhaust outlet 8 (Figure 5), through a "silencer" and into the atmosphere.

Figure 7 is a top plan view, partially cut away, of the rotor shoe. Several other features come into view here. The desorbed columns are vented upward through the exhaust slot 40, through a vent 42 in the rotor shoe cover plate 46, into the rotor void space, and out through the exhaust port 8 (Figure 5).

The third channel is a cross-port channel 44 which serves as a conduit between two columns which are in transition between the pressurizing and desorbing phases of a cycle. Its purpose is to quickly equalize pressure in columns transitioning between the adsorbing and desorbing cycles. This feature enhances product concentration at high product flow rates.

The purge flow rate is the rate at which the purging fluid flows countercurrent to adsorption during regeneration of the columns. There is an optimal purge rate for maximal removal of nitrogen during regeneration. A very high purge rate causes the pressure within a bed to be greater than atmospheric, resulting in reduced desorption efficiency. The cross-porting channel in the rotor shoe allows a pressure drop in the column bed before it enters the desorption cycle. This prevents a very rapid decompression and thus excessively high initial purge flow. This effect is easily measurable by simple instrumentation; however, its basis at the molecular level is not understood.

Figure 8 is a sectional view taken on line 8-8 of Figure 7, showing the routing of the pressurizing 34, cross-porting 44 and exhausting 40 channels in the rotor shoe 18.

Figure 9 is a top plan view of the port plate showing the circular location of ports of channels leading to each of the array of columns, and Figure 10 is a sectional view taken on line 10-10 of Figure 9.

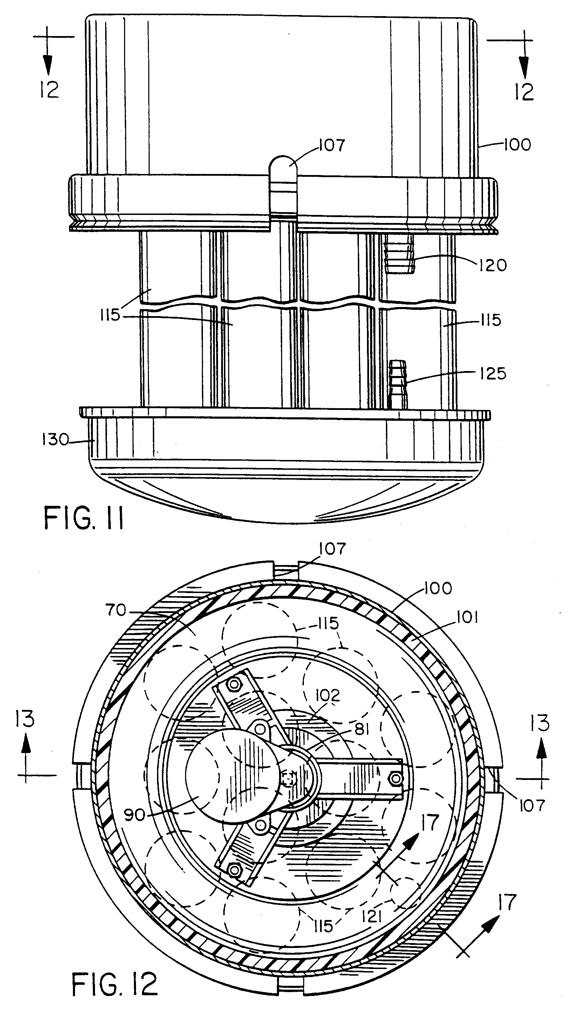

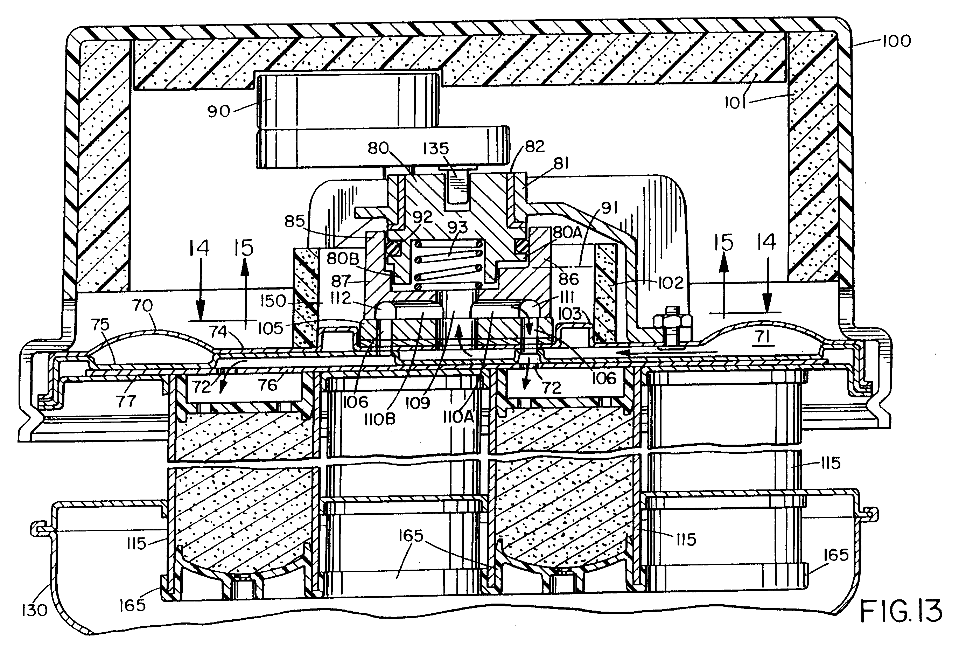

Figure 11 depicts an alternative embodiment of the apparatus of this invention, with a sectional view taken on line 12-12 thereof shown in Figure 12. This latter view shows an array of adsorber columns similar to the columns 22 depicted in Figure 4. As in Figure 4, twelve columns are the preferred number shown in the embodiment of Figure 12. It should be noted, however, that a length to diameter ratio of greater than 6:1 for the adsorber columns is preferred with the only limit on length being a practical one. This ratio permits the adsorption medium to be retained within the columns without the use of springs to compress and retain the adsorption media therein. At least one layer of filter media must, however, be present at each end of the column to avoid loss of adsorption medium through the inlet and outlet orifices to and from the columns. A cap 165 will be mechanically seated over the distal end of each of said columns, through which outlet orifice (not shown) to product tank 130 (Figure 13) extends.

The rotary distributor valve depicted in Figure 13, which is an enlarged sectional view taken on line 13-13 of Figure 12, comprises a manifold 70 which is formed from one or more layers of aluminum, which layer or layers are pierced, and/or die formed or embossed and then, if a multiplicity of layers is used, sealed in a stacked configuration (by lamination or equivalent means) to form fluid channels. Four layers of aluminum (74, 75, 76 and 77) are shown in Figure 13; it will be appreciated, however, that one or more layers of any lightweight, rigid, low density material (such as a-b-s resin plastic) may be used.

The rotary valve further comprises a rotor shaft 80 rotatably retained within bearing housing 81 and within rotor shoe 85. Rotation of rotor shaft 80 is permitted by the presence of O-ring 92 around its circumference. Rotor shaft 80 is driven by gear motor 90 via motor shaft 135 at about one revolution per minute. As depicted in Figure 13, said rotor shaft 80 is concentrically shaped above line 91 and eccentrically shaped below line 91. The eccentric shape is achieved by enlarging the lateral thickness of side wall 80A of rotor shaft 80 with respect to side wall 80B.

Rotor shoe 85 comprises a ported disc (similar in structure and composition to rotor shoe 18 depicted in Figure 7) with raised side walls 86 and 87 which define a circular chamber into which rotor shaft 80 is seated. Rotor shoe 85 is driven by torque exerted by rotor shaft 80 when the latter is driven by gear motor 90. Compression spring 93 assists in sealing the shaft and shoe, thus maintaining the seal even when the apparatus is not in operation and compensating for wear experienced by the shaft and shoe. Use of this configuration to form a pressure balanced seal requires less torque to turn the rotor, and thus less energy to operate the system than required by prior art systems or the embodiment of Figures 3-10.

The pressure balanced seal between the rotor shaft and shoe is a function of the integrated pressure exerted on the surface of the rotor shoe between it and the rotor shaft during operation of the apparatus and the diameter of the rotor shaft. During operation, the fluid pressure at fluid inlet port 109 at the start of adsorption multiplied by the diameter squared of the rotor shaft (below line 91) and by π/4 is equal the force exerted to form a seal between the shaft and shoe. As a result of this relationship, the shaft and shoe will remain sealed and balanced with respect to each other even if the fluid pressure at fluid inlet port 109 varies. It should be noted that there is a passage (not shown) from port 109 through to the interface surface between rotor shaft 80 and rotor shoe 85 which serves to pressurize the interface to help maintain the pressure balanced seal.

This apparatus also features an enhanced noise control design. As shown in Figure 13, said noise control design comprises muffler housing 100, having inner and outer surfaces preferably formed by a flexible plastic, which snaps over manifold 70 to form a cover for the manifold and rotary valve distributor. The noise control design further consists of pieces of acoustical foam or equivalent acoustical attenuating material placed within the apparatus as follows: at 101, said foam conforms topographically, in one or more pieces, to the inner surface of muffler housing 100. At 102, acoustical foam is seated vertically between bearing housing 81 and manifold 70. Said foam 102 may be retained in place by a portion of layer 74 of manifold 70 formed to provide a stop 103 between foam 102 and port plate 105.

In operation, sound waves emitted by the operation of the rotary valve distributor escape from exhaust ports 113 and 114 in the rotor shoe into the annular air space 150 between the shoe and acoustical foam 102. Those sound waves not dissipated by striking foam 101 and 102 eventually escape from slots 107 in the walls of muffler housing 100. The noise control design would, therefore, be considered in the art as a reactive muffler.

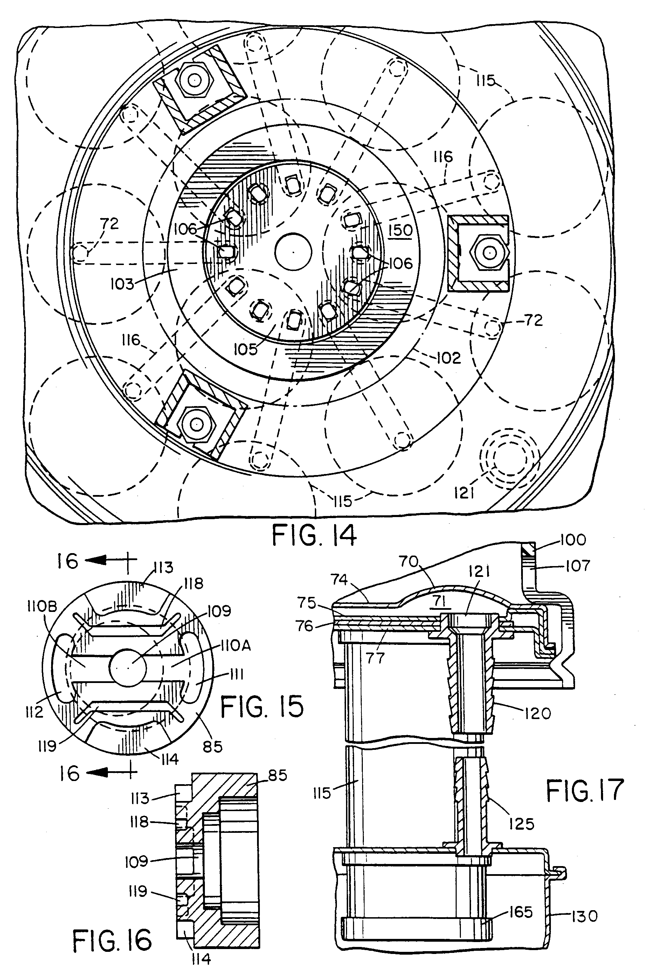

Recessed into layer 74 of manifold 70 is port plate 105. Port plate 105 is similar in structure to port plate 20 of the embodiment depicted in Figure 5, except that, while the inlet ports therein to the adsorber columns (one port per column) may be of any shape, they are preferably in the shape of wedges and most preferably in a arched keystone shape which will circumscribe the orifices 106 leading into the columns 115 via air fed channels 116 (Figure 14). Wedge-shaped inlet ports are best depicted at 106 of Figure 14, which is a sectional view taken on line 14-14 of Figure 13.

As in the embodiment of the apparatus shown in Figures 3-10, fluid is directed to the inlet ports 106 in port plate 105 for passage to the adsorber columns via channels in the rotor shoe. As best depicted in Figure 15, rotor shoe 85 comprises three sets of channels. The first set of channels consist of pressurizing channels 110A and 110B which extend respectively and radially from central fluid inlet port 109 to symmetrical air feed ports 111 and 112 (while two air feed ports are shown, it will be appreciated that more than any number of two or more may be used as long as the ports are arranged in axial symmetry about inlet port 109). In terms of direction of flow, fluid travels through fluid inlet port 109 to air feed ports 111 and 112 through ports 106 in port plate 105 to air feed channels 116 (shown in Figure 14) which lead from each port 106 to an adsorber column (shown in sectional view in Figure 14 at 115).

The second set of channels consist of at least two exhaust ports (113 and 114 in Figure 15) which will be equal in number to air feed ports 111 and 112 and will also be arranged with axial symmetry with respect to inlet port 109. The desorbed columns are vented upward through exhaust ports 113 and 114, to annular air space 150 and eventually to the atmosphere via slots 107 in muffler housing 100 (Figure 13).

The third set of channels are at least one pair of symmetrical cross-port channels 118 and 119 (equal in number to air feed ports 111 and 112). These channels serve to quickly equalize pressure between columns transitioning between the adsorption and desorption phases much in the same manner as does the single cross-port channel 44 depicted in Figure 7.

The number and symmetry of shape and size common to each set of channels avoids the preloading spring which results from the use of asymmetrical ports, where variances between the fluid pressure present at the air feed and exhausts ports may push the rotor shoe against the port plate during operation

Excepting the points of difference described above, the apparatus of Figures 11-17 is substantially similar to the apparatus of Figures 3-10.

The preferred method of fractionating fair to provide an oxygen-rich air supply to a patient is described below.

### Fractionation Method

At this point it is reiterated that although air fractionation is described, the method is effective in fractionating other fluids.

In the embodiment of the apparatus of Figures 3-10, the method of fractionation is as follows: compressed air enters the inlet port 6 of the manifold (Figure 6) and is channeled through the air passage 33 in the manifold 14 communicating with the rotor shoe 18 and then into the arcuate pressurizing slot 36 to enter sequentially into several ports 38 in the port plate as the rotor shoe 18 turns. As these ports become pressurized, the gas mixture enters, pressurizes and flows through each attached column 22 where the separation takes place.

Referring now to Figure 5, the desired gas, oxygen in this case, is free to move through the zeolite adsorbent bed 24 (e.g., similar to that provided by the molecular sieve division of UOP), while the undesired gases and vapor (nitrogen plus CO₂, CO, H₂O) are retained, because of their molecular size and the relatively high pressure and low temperature, in the matrix of the adsorbent bed.

The purified desired gas product (oxygen) moves out of the column through a pressure-dropping means such as a small orifice 60 or a fluid porous plug in the bottom of the column and into the circumscribed product tank 9. From the product tank, a relatively small portion of the oxygen is tapped off by the distribution system conduit at the outlet port 7 (Figure 6) for use by the patient, and another, relatively large, portion enters the columns in the opposite bank, which are under nearly atmospheric pressure, through a corresponding small pressure dropping/flow restricting orifices in the bottom to reflux through the bed in a direction opposite to gas flow during pressurization. The amount of product used to purge versus the amount delivered by the distribution system can vary, depending on the degree of product purity desired. This backwash of product gas at pressure lower than the adsorbing cycle removes the contaminant embedded in the zeolite matrix, in this case nitrogen, and flushes it out through the top of each column into the manifold 14, the port plate 20 and through the rotor shoe 18 and exhaust outlet 8 into the atmosphere via a silencer or muffler.

Referring back to Figure 2, the tapped oxygen-rich product gas then moves within a dispensing conduit through a manually controlled valve 50 with a flow meter, through a final filter (HEPA) 52 and to the dispensing terminus.

In the embodiment of the apparatus shown in Figures 11-17, the method of fractionation is as follows: compressed air enters the manifold from inlet conduit 120 through inlet port 121 (Figures 14 and 17) and is channeled through channel 71 communicating with the rotor shoe 85 via central fluid inlet port 109. The air then passes through radial channels 110A and 110B to inlet ports 111 and 112. As the rotor shoe turns over port plate 105, inlet ports 111 and 112 will each become aligned with an equal plurality of wedge-shaped ports 106, thus allowing the air to enter the columns 115 via air feed channels 116 corresponding with each plurality of ports 106 served respectively by inlet ports 111 and 112. Adsorption occurs within the columns as described above.

The purified product is retained within product tank 130 after exiting the column via pressure-dropping means such as orifice 60 depicted in Figure 5. Product tank 130 (Figure 11) differs from product tank 9 (Figure 5) in that tank 130 is smaller in volume and does not surround columns 115 except at their distal ends; i.e., opposite manifold 70. This smaller product tank (vis-a-vis product tank 130 [Figure 11]) reduces the overall weight of the system. As will be understood by those skilled in the art, the limits on reduction of the size of product tank 130 are practical ones, principally dictated by storage needs and the volume required to regulate the output pressure of the system sufficiently well to reduce the need for a pressure regulator.

Product is tapped for use by the operator or patient via outlet conduit 125. The system is then purged as described above with respect to the method used with the apparatus depicted in Figures 3-10.

In both embodiments and methods described above, when the motor is operated at the specified speed (i.e., 1 revolution per minute for the embodiment of Figures 11-17 and 2 revolutions per minute for the embodiment of Figures 3-10), and the inlet and exhaust ports in the rotor shoe are equal in size, the cycle profile is such that each column is pressurized for approximately 12.5 seconds, equilibrated for 2.5 seconds, and desorbed for 12.5 seconds and re-equilibrated. This profile of the cycle is obtainable only when the intake and exhaust slots in the rotor shoe are equal in size, and service an equal number of columns. The profile can be altered as desired by varying the size of the respective inlet and exhaust ports. This is a desirable feature which cannot be put into effect in any of the prior art mechanisms.

As the rotor rotates over the rotor plate, this cycle is sequentially and continuously established for each column. This mode of operation produces a relatively constant flow of product, improving with a greater number of columns, eliminating the need for a pressure reducing regulator. The average product outlet pressure is nearly constant and about twice the regulated delivery pressure of prior art fractionators.

Some other advantages of the present invention are outlined hereunder. Because of the large number of relatively small diameter adsorber columns, the column length may be short, even with a large length:diameter ratio which is essential for effective adsorption separation. The large number of columns and the rotary distributor valve result in a quasi steady-state gas flow through the compressor and other components which produces a number of advantages and system simplifications. The invention permits optimization of the adsorption cycle by providing the possibility of employing unequal times for the adsorption and desorption phases of the cycle. Prior art two chamber systems are inherently bound to equal times.

Another notable advantage of the invention is the elimination of many components which are necessary in the prior art, thereby, reducing size, weight and the amount of maintenance, concomitantly increasing reliability and maneuverability for the ambulatory patient. These eliminated components include:
Air receiver or surge tank
Four or five solenoid valves (or a 4-way valve and one 2-way solenoid valve)
Electric or electronic sequencing control for the solenoid valves
Pressure reducing regulator
Almost all connecting tubing and fittings

The elimination of almost all "plumbing" decreases size and weight, the potential for system leaks and reduces manufacturing costs.

Although the adsorbent material utilized in this embodiment is a synthetic zeolite, there are many other useful adsorbents available; therefore, this invention should not be construed as restricted to its use. It is understood by those well versed in the art that many other configurations are possible while employing the rotary distributor concept, which are within the scope of this invention.

## Claims

1. An apparatus for fractionating a fluid mixture by pressure swing molecular adsorption having a pressurizing phase and a desorbing phase which comprises:
**a.** a plurality of adsorber columns (22, 115), each having a proximal and distal end and containing molecular adsorption medium (24) for fractionation of a mixture of fluids passed thereinto by separation of said mixture into a purified portion which passes through said plurality of columns (22, 115) and exists therefrom during said pressurizing phase and a retained portion which is retained by said medium (24) in said columns (22,115) during said pressurizing phase and is exhausted during said desorbing phase;
**b.** chamber means (9, 130) surrounding at least the distal ends of said columns (22, 115), for providing means for receiving and storing said purified portion and a fluid exit port (7,125) for removal of a first part of said purified portion from said chamber (9, 130);
**c.** a distributor valve assembly comprising
i. a fluid manifold (14, 70) having fluid channels (33, 8,71,107) for receiving said fluid mixture and purging said retained portion;
ii. an immobile port plate (20, 105) having a plurality of openings (38, 106) in fluid communication with said columns (22, 115);
iii. rotatable distributor means in fluid communication with said manifold (14, 70), said means comprising an integral inlet channel (19, 109) for a substantially continuous flow of fluid, a rotor shaft (16, 80) and a rotor shoe (18, 85) having at least one inlet port (36, 111, 112) in fluid communication with said integral inlet channel (19, 109), which inlet port simultaneously pressurizes a first plurality of columns (22, 115) as said rotor shoe (18, 85) rotates said inlet port sequentially over said plurality of openings (38, 106) in said port plate (20, 105); at least one exhaust port (40, 113, 114) which simultaneously exhausts reflux fluid carrying the retained portion and emanating from a second plurality of columns (22, 115) as said rotor (18, 85) rotates said exhaust port (40, 113, 114) sequentially over said openings (38, 106) in said port plate (20, 105); and at least one cross-porting channel (44, 118, 119) having two ports for connecting at least two columns (22, 115) in a third plurality of columns (22,115) which are in transition between the pressurizing and desorbing phases, allowing rapid pressure equalization; and
**d.** means (11, 90) for rotating said rotatable distributor means.

2. An apparatus according to claim 1, wherein said rotor shaft (80) has concentric and eccentric portions.

3. An apparatus according to claim 1 or 2, wherein said rotor shoe (85) has at least two inlet ports (111,112) in axial symmetry about said integral inlet channel (109) and at least two exhaust ports (113,114) in axial symmetry about said integral inlet channel (109).

4. An apparatus according to any one of claims 1 to 3 wherein said rotor shoe (85) has at least two cross-porting channels (118,119) having two ports each for connecting two or more columns (115).

5. An apparatus according to any one of claims 1 to 4 wherein said chamber means (130) surrounds said distal ends of said columns (115).

6. An apparatus as described in any one of claims 1 to 5 wherein said openings (106) in said port plate (105) are non-circular in shape.

7. An apparatus as described in any of the above claims, wherein said distributor valve assembly is contained within a bearing housing (81), said housing (81) being at least partially lined with acoustical attenuating material (102).

8. An apparatus as in claim 7, wherein said distributor valve assembly and bearing housing (81) are contained within a sealed muffler housing (100), said housing (100) being at least partially lined with acoustical attenuating material (101).

9. An apparatus according to claim 7 or 8, wherein said housing (81,100) is disposed on the manifold (70).

10. An apparatus as in any of the above claims, wherein said fluid manifold (70) is formed of more than one layer (74,75,76,77) of material, which layers are stacked to form fluid channels.

11. An apparatus as in claim 10, wherein said manifold (70) is die formed and pierced to form fluid channels.

12. An apparatus as in claim 10, wherein said manifold (70) is embossed to form fluid channels.

13. An apparatus according to any one of claims 1 to 12, wherein sealing means (92) are provided for sealing the rotor shaft (16,80) and the rotor shoe (18,85) relative to each other.

14. An apparatus as in any of the above claims, wherein said rotor shaft (80) is seated within said rotor shoe (85) and rotatably retained therein, forming a pressure passage from inlet channel (109) to the interface surface between rotor shaft (80) and rotor shoe (85) for providing a pressure balanced seal between said rotor shoe (85) and said port plate (105).

15. An apparatus as in claim 1, wherein said rotor shoe (18) has an arcuate distribution port (36), an arcuate exhaust port (40), a cross-porting channel (44) with two ports each situated between the two arcuate ports (36,40) and an integral exhaust channel (42) for a substantially continuous exhaust of fluid carrying the retained portion; wherein means (11) for rotating said rotatable exhaust outlet means (42) are provided and wherein said columns (22) are contained in said chamber means (9).

16. An apparatus as described in any one of the above claims, wherein said columns (22,115) have a high length to diameter ratio.

17. An apparatus as described in claim 16, wherein said columns (22,115) have a length to diameter ratio of more than 6:1.

18. An apparatus as described in any one of the above claims, wherein said columns (2,115) contain means to reduce reflux pressure.

19. An apparatus as described in claim 18, wherein said means to reduce reflex pressure comprises a small orifice (60) at the end of each column (22,115) opposite said rotary distributor valve.

20. An apparatus as described in claim 19, wherein said columns (22,115) are sealed by a mechanical sealing means (30,76) at the end opposite to the orifice (60).

21. An apparatus as described in any one of the above claims, wherein a compression spring (35,93) is situated between said rotor shaft (16,80) and said rotor shoe (18,85).

22. An apparatus as described in any one of the above claims, wherein said fluid mixture is air.

23. An apparatus as described in any one of the above claims, wherein said adsorbent medium (24) is a zeolite.

24. An apparatus as described in any one of the above claims including twelve columns (22,115).

25. An apparatus according to any one of claims 1 to 24, wherein said chamber means are formed by a product tank (9,130).

26. A process for removing a fluid component of a particular fluid from a stream of a mixture of fluids or a contaminating component from a stream of a single fluid through pressure swing adsorption having a pressurizing phase and a desorbing phase comprising the steps of:
**a.** admitting a pressurized fluid mixture into a rotary valve distributor attached to a plurality of adsorber columns (22,115) packed with an adsorbent material (24) selective for the fluid or contaminant to be removed, each of said plurality of columns (22,115) having proximal and distal ends;
**b.** sequentially distributing said compressed fluid mixture, by means of a rotating member (18,85) of said rotary valve distributor, into more than one of said columns (22,115) for simultaneously subjecting a first plurality of columns (22,115) to said pressurizing phase where said fluid or contaminant is retained and desired product fluid is allowed to pass through to a product tank (9,130) attached to the distal end of said columns (22,115);
**c.** sequentially and simultaneously with step **b.**, allowing said retained fluid or contaminant, by means of said rotating member (18,85), to exhaust from more than one of said columns (22,115) for simultaneously subjecting a second plurality of columns (22,115) to said desorbing phase by refluxing, under low pressure, a portion of product fluid through said second plurality of columns (22,115), said fluid entering through one end of each of said columns (22,115) and exiting through the opposite end;
**d.** sequentially and simultaneously with steps **b.** and **c.**, connecting, by means of said rotating member (18,85), at least one column (22,115) in transition between said pressurizing phase and said desorbing phase to at least one column (22,115) in transition between said desorbing phase and said pressurizing phase for subjecting a third plurality of columns (22,115) to rapid pressure equalization; and
**e.** simultaneously withdrawing purified product fluid from said product tank (9,130) as required.

27. The process of claim 26, including predetermining fractionating cycle profile by predetermining the size of the respective inlet and exhaust ports (36,40,111,112,113,114).

## Patentansprüche

1. Vorrichtung zum Fraktionieren einer Strömungsmittelmischung durch Druck-Schwing-Molekularadsorption mit einer Druckphase und einer Desorptionsphase, mit:
a) einer Vielzahl von Adsorbersäulen (22, 115), von denen jede ein inneres und ein äußeres Ende aufweist und ein Molekularadsorptionsmedium (24) enthält zum Fraktionieren einer durchgeleiteten Strömungsmittelmischung durch Trennung der Mischung in einen gereinigten Anteil, der durch die Mehrzahl der Säulen (22, 115) hindurchtritt und sie während der Druckphase verläßt, und einen zurückgehaltenen Anteil, der durch das Medium (24) in den Säulen (22, 115) während der Druckphase zurückgehalten wird und während Desorptionsphase entleert wird;
b) einer Kammereinrichtung (9, 130), die mindestens die äußeren Enden der Säulen (22, 115) umgibt, um eine Einrichtung zum Aufnehmen und Aufbewahren des gereinigten Anteils zu schaffen, und eine Strömungsmittelauslaßöffnung (7, 125), für die Entfernung eines ersten Teils des gereinigten Anteils aus der Kammer (9, 130);
c) eine Verteilerventileinheit mit
i . einem Strömungsmittelverteiler (14, 70) mit Strömungsmittelkanälen (33, 8, 71, 107) zum Aufnehmen der Strömungsmittelmischung und zum Ausspülen des zurückgehaltenen Anteils;
i i. einer feststehenden Durchlaßplatte (20, 105) mit einer Vielzahl von Öffnungen (31, 106) in Strömungsmittelverbindung mit den Säulen (22, 115);
i ii. einer drehbaren Verteileinrichtung in Strömungsmittelverbindung mit dem Verteiler (14, 70), wobei die Einrichtung einen einstückigen Einlaßkanal (19, 109) für eine im wesentlichen kontinuierliche Strömung des Strömungsmittels, eine Rotorwelle (16, 80) und einen Rotorschuh (18, 85) aufweist, der mindestens eine Einlaßöffnung (36, 111, 112) in Strömungsmittelverbindung mit dem einstückigen Einlaßkanal (19, 109) aufweist, wobei die Einlaßöffnung gleichzeitig eine erste Vielzahl von Säulen (22, 115) unter Druck setzt, wenn der Rotorschuh (18, 85) die Einlaßöffnung nacheinander über die Vielzahl von Öffnungen (38, 106) in der Durchlaßplatte (20, 105) dreht, mindestens eine Entleerungsöffnung (40, 113, 114), die gleichzeitig refluxiertes Strömungsmittel entleert, das mit dem zurückgehaltenen Anteil beladen ist, und aus einer zweiten Vielzahl von Säulen (22, 115) austritt, wenn der Rotor (18, 85) die Entleerungsöffnung (40, 113, 114) nacheinander über die Öffnungen (38, 106) in der Durchtrittsplatte (20, 105) dreht, und mindestens einem Kreuzöffnungskanal (44, 118, 119), der zwei Öffnungen zum Verbinden von mindestens zwei Säulen (22, 115) in einer dritten Anzahl von Säulen (22, 115) aufweist, die sich im Übergang zwischen Druck- und Desorptionsphasen befinden, wodurch ein schneller Druckausgleich möglich ist; und
d) einer Einrichtung (11, 90) zum Drehen der drehbaren Verteileinrichtung.

2. Vorrichtung nach Anspruch 1, wobei die Rotorwelle (80) konzentrische und exzentrische Bereiche aufweist.

3. Vorrichtung nach Anspruch 1 oder 2, wobei der Rotorschuh (85) mindestens zwei Einlaßöffnungen (111, 112) in Axialsymmetrie um den integralen Einlaßkanal (109) und mindestens zwei Entleerungsöffnungen (113, 114) in Axialsymmetrie um den integralen Einlaßkanal (109) aufweist.

4. Vorrichtung nach einem der Ansprüche 1 bis 3, wobei der Rotorschuh (85) mindestens zwei Kreuzöffnungskanäle (118, 119) aufweist, die jeweils zwei Öffnungen für eine Verbindung von zwei oder mehreren Säulen (115) aufweisen.

5. Vorrichtung nach einem der Ansprüche 1 bis 4, wobei die Kammereinrichtung (130) das äußere Ende der Säulen (115) umgibt.

6. Vorrichtung nach einem der Ansprüche 1 bis 5, wobei die Öffnungen (106) in der Durchlaßplatte (105) eine nicht-kreisförmige Form aufweisen.

7. Vorrichtung nach einem der obengenannten Ansprüche, wobei die Verteilerventileinheit in einem Lagergehäuse (81) enthalten ist, wobei das Gehäuse (81) mindestens teilweise mit einem akustischen Dämmaterial (102) ausgekleidet ist.

8. Vorrichtung nach Anspruch 7, wobei die Verteilerventileinheit und das Lagergehäuse (81) innerhalb eines abgedichteten Schalldämpfergehäuses (100) enthalten sind, wobei das Gehäuse (100) mindestens teilweise mit einem akustischen Dämmaterial (101) ausgekleidet ist.

9. Vorrichtung nach Anspruch 7 oder 8, wobei das Gehäuse (81, 100) auf dem Verteiler (70) angeordnet ist.

10. Vorrichtung nach einem der obengenannten Ansprüche, wobei der Strömungsmittelverteiler (70) aus mehr als einer Schicht (74, 75, 76, 77) eines Materials hergestellt ist, wobei die Schichten zur Ausbildung von Strömungsmittelkanälen gestapelt sind.

11. Vorrichtung nach Anspruch 10, wobei der Verteiler (70) gesenkgeformt und gelocht ist, um die Strömungsmittelkanäle zu bilden.

12. Vorrichtung nach Anspruch 10, wobei der Verteiler (70) eingedrückt ist, um Strömungsmittelkanäle zu bilden.

13. Vorrichtung nach einem der Ansprüche 1 bis 12, wobei eine Dichteinrichtung (72) zum Abdichten der Rotorwelle (16, 80) und des Rotorschuhs (18, 85) relativ zueinander vorgesehen ist.

14. Vorrichtung nach einem der vorangegangenen Ansprüche, wobei die Rotorwelle (80) innerhalb des Rotorschuhs (85) sitzt und darin drehbar gehalten ist, wodurch eine Druckverbindung vom Einlaßkanal (109) zur Grenzfläche zwischen der Rotorwelle (80) und dem Rotorschuh (85) ausgebildet ist, um eine druckabgeglichene Dichtung zwischen dem Rotorschuh (85) und der Durchlaßplatte (105) zu bilden.

15. Vorrichtung nach Anspruch 1, wobei der Rotorschuh (18) eine gekrümmte Verteilöffnung (36), eine gekrümmte Entleerungsöffnung (40), einen Kreuzöffnungskanal (44) mit zwei Öffnungen, von denen jede zwischen den beiden gekrümmten Öffnungen (36, 40) angeordnet ist, und einen integralen Entleerungskanal (42) aufweist, für eine im wesentlichen kontinuierliche Entleerung von Strömungsmittel, das mit dem zurückgehaltenen Anteil beladen ist, wobei eine Einrichtung (11) zum Drehen der drehbaren Entleerungsauslaßeinrichtung (42) vorgesehen ist, und wobei die Säulen (22) in der Kammereinrichtung (9) enthalten sind.

16. Vorrichtung nach einem der obengenannten Ansprüche, wobei die Säulen (22, 115) ein hohes Verhältnis von Länge zu Durchmesser aufweisen.

17. Vorrichtung nach Anspruch 16, wobei die Säulen (22, 115) ein Verhältnis von Länge zu Durchmesser von mehr als 6:1 aufweisen.

18. Vorrichtung nach einem der vorangegangenen Ansprüche, wobei die Säulen (2, 115) eine Einrichtung aufweisen, um den Refluxierdruck zu reduzieren.

19. Vorrichtung nach Anspruch 18, wobei die Einrichtung zum Reduzieren des Refluxierdruckes eine kleine Öffnung (60) am Ende jeder Säule (22, 115), dem Drehverteilventil gegenüberliegend, aufweist.

20. Vorrichtung nach Anspruch 10, wobei die Säulen (22, 115) durch eine mechanische Dichteinrichtung (30, 76) am der Öffnung (60) gegenüberliegenden Ende abgedichtet sind.

21. Vorrichtung nach einem der vorangegangene Ansprüche, wobei eine Druckfeder (35, 93) zwischen der Rotorwelle (16, 80) und dem Rotorschuh (18, 85) angeordnet ist.

22. Vorrichtung nach einem der vorstehenden Ansprüche, wobei die Strömungsmittelmischung Luft ist.

23. Vorrichtung nach einem der vorangegangenen Ansprüche, wobei das Adsorptionsmittel (24) ein Zeolith ist.

24. Vorrichtung nach einem der vorangegangenen Ansprüche, enthaltend zwölf Säulen (22, 115).

25. Vorrichtung nach einem der Ansprüche 1 bis 24, wobei die Kammereinrichtung als Produkttank (9, 130) ausgebildet ist.

26. Verfahren zum Entfernen einer Strömungsmittelkomponente eines bestimmten Strömungsmittels aus einem Strom einer Strömungsmittelmischung oder eine kontaminierende Komponente aus einem Strom eines einzigen Strömungsmittels durch eine Druck-Schwing-Adsorption mit einer Druckphase und einer Desorptionsphase, enthaltend die folgenden Verfahrensschritte:
a) Einleiten einer Strömungsmittelmischung unter Druck in einen Drehventilverteiler, der an einer Vielzahl von mit einem adsorbierenden Material (24), das selektiv für das zu entfernende Strömungsmittel oder die Verunreinigung wirkt, gepackten Adsorbersäulen (22, 115) angeordnet ist, wobei jede der Vielzahl von Säulen (22, 115) innere und äußere Enden aufweist;
b) das Verteilen der Strömungsmittelmischung unter Druck nacheinander durch ein sich drehendes Teil (18, 85) des Drehventilverteilers, in mehr als eine dieser Säulen (22, 115), damit gleichzeitig eine erste Vielzahl von Säulen (22, 115) der Druckphase unterworfen wird, wo das Strömungsmittel oder die Verunreinigung zurückgehalten und das gewünschte Produktströmungsmittel in einen Produkttank (9, 113) durchtreten kann, der am äußeren Ende der Säulen (22, 115) angeordnet ist;
c) Entleeren des zurückgehaltenen Strömungsmittels oder der Verunreinigung durch das sich drehende Teil (18, 85) der Reihe nach und gleichzeitig mit dem Verfahrensschritt (b) aus mehr als einer der Säulen (22, 115), um gleichzeitig eine zweite Anzahl von Säulen (22, 115) der Desorptionsphase zu unterwerfen, indem ein Anteil des Produktströmungsmittels unter niedrigem Druck durch die zweite Anzahl von Säulen (22, 115) refluxiert wird wobei das Strömungsmittel durch ein Ende der Säulen (22, 115) eintritt und sie durch das gegenüberliegende Ende verläßt;
d) Verbinden durch das drehende Teil (18, 85) nacheinander und gleichzeitig mit den Verfahrensschritten (b) und (c), von mindestens einer Säule (22, 115) im Übergang zwischen der Druckphase und der Desorptionsphase mit mindestens einer Säule (22, 115) im Übergang zwischen der Desorptionsphase und der Druckphase, um eine dritte Vielzahl von Säulen (22, 115) einem schnellen Druckausgleich zu unterwerfen; und
c) gleichzeitiges Abziehen des gereinigten Produktes aus dem Produkttank (9, 130) nach Bedarf.

27. Verfahren nach Anspruch 26, umfassend eine Vorbestimmung des Profils des Fraktionierzyklus durch Vorbestimmung der Größe der entsprechenden Einlaß- und Entleerungsöffnungen (36, 40, 111, 112, 113, 114).

## Revendications

1. Un appareil de fractionnement d'un mélange de fluides par une adsorption moléculaire à oscillation de pression, ayant une phase de pressurisation et une phase de désorption comprenant :
a. une pluralité de colonnes d'adsorption (22, 115), ayant chacune une extrémité proximale et distale et contenant un milieu d'adsorption moléculaire (24) pour le fractionnement d'un mélange de fluides y étant passé, par une séparation dudit mélange en une partie purifiée, qui traverse ladite pluralité de colonnes (22, 115) et en sort durant ladite phase de pressurisation, et une partie de retenue, qui est retenue par ledit milieu (24) dans lesdites colonnes (22, 115) durant ladite phase de pressurisation et est évacuée durant ladite phase de désorption ;
b. des moyens formant chambre (9, 130) entourant au moins les extrémités distales desdites colonnes (22, 115) afin de fournir des moyens de réception et de stockage de ladite partie purifiée et un orifice de sortie de fluide (7, 125) afin d'enlever une première partie de ladite partie purifiée de ladite chambre (9, 130) ;
c. un agencement de vanne de distribution comprenant
i. un collecteur de fluide (14, 70) ayant des canaux de fluide (33, 8, 71, 107), afin de recevoir ledit mélange de fluides et de purger ladite partie de retenue ;
ii. une plaque à orifices immobile (20, 105) ayant une pluralité d'ouvertures (38, 106) en communication fluidique avec lesdites colonnes (22, 115) ;
iii. des moyens distributeurs rotatifs en communication fluidique avec ledit collecteur (14, 70), lesdits moyens comprenant un canal d'entrée (19, 109) monobloc pour un écoulement sensiblement continu de fluide, un arbre de rotor (16, 80) et un patin de rotor (18, 85) ayant au moins un orifice d'entrée (36, 111, 112) en communication fluidique avec ledit canal d'entrée monobloc (19, 109), cet orifice d'entrée pressurisant simultanément une première pluralité de colonnes (22, 115) lorsque ledit patin de rotor (18, 85) fait tourner ledit orifice d'entrée séquentiellement sur ladite pluralité d'ouvertures (38, 106) dans ladite plaque à orifices (20, 105) ; au moins un orifice d'évacuation (40, 113, 114) qui évacue simultanément un fluide de reflux véhiculant la partie de retenue et provenant d'une deuxième pluralité de colonnes (22, 115), lorsque ledit rotor (18, 85) fait tourner ledit orifice d'évacuation (40, 113, 114) séquentiellement au-dessus desdites ouvertures (38, 106) dans ladite plaque à orifices (20, 105) ; et au moins un canal de liaison (14, 118, 119) ayant deux orifices servant à relier au moins deux colonnes (22, 115) dans une troisième pluralité de colonnes (22, 115) qui sont en transition entre les phases de pressurisation et de désorption, permettant une égalisation de pression rapide ;
d. des moyens (11, 90) pour faire tourner lesdits moyens distributeurs rotatifs.

2. Appareil selon la revendication 1, dans lequel ledit arbre de rotor (80) présente des parties concentriques et excentriques.

3. Appareil selon la revendication 1 ou 2, dans lequel ledit patin de rotor (85) présente au moins deux orifices d'entrée (111, 112) en symétrie axiale autour dudit canal d'entrée monobloc (109) et au moins deux orifices d'évacuation (113, 114) en symétrie axiale autour dudit canal d'entrée monobloc (109).

4. Appareil selon l'une quelconque des revendications 1 à 3, dans lequel ledit patin de rotor (85) présente au moins deux canaux de liaison (118, 119) ayant deux orifices servant chacun à relier deux colonnes (115) ou plus.

5. Appareil selon l'une quelconque des revendications 1 à 4, dans lequel ledit moyen formant chambre (130) entoure lesdites extrémités distales desdites colonnes (115).

6. Appareil selon l'une quelconque des revendications 1 à 5, dans lequel lesdites ouvertures (106) ménagées dans ladite plaque à orifices (105) sont de forme non circulaire.

7. Appareil selon l'une quelconque des revendications ci-dessus, dans lequel ledit agencement de vanne de distribution est contenu dans un boîtier de palier (81), ledit boîtier (81) étant au moins partiellement recouvert par un matériau d'atténuation acoustique (102).

8. Appareil selon la revendication 7, dans lequel ledit agencement de vanne de distribution et le boîtier de palier (81) sont contenus dans un boîtier de silencieux (109) fermé hermétiquement, ledit boîtier (100) étant au moins partiellement recouvert d'un matériau d'atténuation acoustique (101).

9. Appareil selon la revendication 7 ou 8, dans lequel ledit boîtier (81, 100) est disposé sur le collecteur (70).

10. Appareil selon l'une quelconque des revendications ci-dessus, dans lequel ledit collecteur de fluides (70) est constitué de plus d'une couche (74, 75, 77) de matériau, ces couches étant empilées afin de former des canaux de fluide.

11. Appareil selon la revendication 10, dans lequel ledit collecteur (70) est formé sur matrice et percé afin de former des canaux de fluide.

12. Appareil selon la revendication 10, dans lequel ledit collecteur (70) est bosselé pour former des canaux de fluide.

13. Appareil selon l'une quelconque des revendications 1 à 12 dans lequel des moyens d'étanchéité (92) sont prévus pour isoler hermétiquement l'arbre de rotor (16, 80) et le patin de rotor (18, 85) l'un par rapport à l'autre.

14. Appareil selon l'une quelconque des revendications ci-dessus, dans lequel ledit arbre de rotor (80) est placé dans ledit patin de rotor (85) et y est maintenu à rotation, formant un passage de pression depuis le canal d'entrée (109) vers la surface d'interface entre l'arbre de rotor (80) et le patin de rotor (85), pour fournir une étanchéité à pression équilibrée entre le patin de rotor (85) et ladite plaque à orifices (105).

15. Appareil selon la revendication 1, dans lequel ledit patin de rotor (18) présente un orifice de distribution (36) arqué, un orifice d'évacuation (40) arqué, un canal de liaison (40) avec deux orifices placés chacun entre les deux orifices arqués (36, 40), et un canal d'évacuation (42) monobloc pour une évacuation sensiblement continue d'un fluide véhiculant la partie de retenue ; dans lequel des moyens (11) servant à faire tourner lesdits moyens de sortie d'évacuation (42) rotatifs sont prévus et dans lequel lesdites colonnes (22) sont continues dans lesdits moyens formant chambre (9).

16. Appareil selon l'une quelconque des revendications ci-dessus, dans lequel lesdites colonnes (22, 115) présentent un rapport élevé de la longueur par rapport au diamètre.

17. Appareil selon la revendication 16, dans lequel lesdites colonnes (22, 115) présentent un rapport entre la longueur et le diamètre qui est supérieur à 6:1.

18. Appareil selon l'une quelconque des revendications ci-dessus, dans lequel lesdites colonnes (2, 115) contiennent des moyens pour induire la pression de reflux.

19. Appareil selon la revendication 18, dans lequel lesdits moyens pour réduire la pression de reflux comprennent un petit orifice (60) à l'extrémité de chaque colonne (22, 115) opposée à ladite vanne de distribution rotative.

20. Appareil selon la revendication 19, dans lequel lesdites colonnes (22, 115) sont fermées hermétiquement par des moyens d'étanchéité (30, 76) mécaniques à l'extrémité opposée à l'orifice (60).

21. Appareil selon l'une quelconque des revendications ci-dessus, dans lequel un ressort de compression (35, 93) est placé entre ledit arbre de rotor (16, 80) et ledit patin de rotor (18, 85).

22. Appareil selon l'une quelconque des revendications ci-dessus, dans lequel ledit mélange de fluides est de l'air.

23. Appareil selon l'une quelconque des revendications ci-dessus, dans lequel ledit milieu adsorbant (24) est de la zéolite.

24. Appareil selon l'une quelconque des revendications ci-dessus, comprenant douze colonnes (22, 115).

25. Appareil selon l'une quelconque des revendications 1 à 24, dans lequel lesdits moyens formant chambres sont formés par un réservoir de produit (9, 130).

26. Procédé pour éliminer d'un composant de fluide d'un fluide particulier d'un courant de mélange de fluides ou un composant contaminant d'un courant de fluide unique par une adsorption à oscillation de pression, ayant une phase de pressurisation et une phase de désorption, comprenant les étapes de :
a. introduction d'un mélange de fluides pressurisé dans un distributeur à vanne rotative fixé à une pluralité de colonnes d'adsorption (22, 115) emballées par un matériau adsorbant (24) chacune de ladite pluralité de colonnes (22, 115) ayant des extrémités proximale et distale ;
b. distribution séquentielle dudit mélange de fluides comprimé, au moyen d'un organe rotatif (18, 85) dudit distributeur à vanne rotative, dans plus d'une desdites colonnes (22, 115), afin d'exposer simultanément une première pluralité de colonnes (22, 115) à ladite phase de pressurisation, dans laquelle ledit fluide ou contaminant est retenu et le fluide de produit souhaité peut passer au travers vers un réservoir de produit (9, 130) fixé à l'extrémité distale desdites colonnes (22, 115) ;
c. séquentiellement et simultanément avec l'étape b., évacuation dudit fluide ou contaminant de retenu, au moyen dudit organe rotatif (18, 85), de d'une desdites colonnes (22, 115) afin d'exposer simultanément une deuxième pluralité de colonnes (22, 115) à ladite phase de désorption par reflux, sous une faible pression, d'une partie de fluide de produit à travers ladite deuxième pluralité de colonnes (22, 115), ledit fluide entrant par une extrémité de chacune desdites colonnes (22, 115) et sortant par l'extrémité opposée ;
d. séquentiellement et simultanément aux étapes b. et c., liaison au moyen dudit organe rotatif (18, 85), d'au moins une colonne (22, 115) en transition entre ladite phase de pressurisation et ladite phase de désorption à au moins une colonne (22, 115) en transition entre ladite phase de désorption et ladite phase de pressurisation, pour exposer une troisième pluralité de colonnes (22, 115) à une égalisation de pression rapide ; et
e. extraction simultanée d'un fluide de produit purifié dudit réservoir de produit (9, 130) à volonté.

27. Procédé selon la revendication 26, comprenant la prédétermination d'un profil de cycle de fractionnement en prédéterminant la taille des orifices d'entrée et de sortie (36, 40, 111, 112, 113, 1134) respectifs.
